# NEUE EUROPÄISCHE PATENTSCHRIFT

(11) **EP 0 858 932 B2**
(45) Veröffentlichungstag und Bekanntmachung des Hinweises auf die Entscheidung über den Einspruch: **01.07.2009**
(45) Hinweis auf die Patenterteilung: 09.04.2003
(21) Anmeldenummer: 98101017.6
(22) Anmeldetag: 22.01.1998
(51) Int. Cl.: B60R 1/12

(54) **Aussenrückblickspiegel für Fahrzeuge, vorzugsweise für Kraftfahrzeuge**
Exterior rear view mirror for vehicles, in particular motor vehicles
Rétroviseur extérieur de véhicules, en particulier à moteur

(30) Priorität: 18.02.1997 DE 29702746 U
(43) Veröffentlichungstag der Anmeldung: 19.08.1998
(73) Patentinhaber: Visiocorp Patents S.à.r.l., 1653 Luxembourg (LU)
(72) Erfinder: Zimmerman, Werner, 73113 Ottenbach (DE); Waldmann, Bernd, 72 622 Nürtingen (DE); Eberspächer, Helmut, 73732 Esslingen (DE)
(74) Vertreter: Rausch, Gabriele

(56) Entgegenhaltungen:
- DE-A- 4 228 877
- DE-A- 19 538 771
- DE-A1- 3 542 292
- US-A- 2 595 331
- US-A- 4 929 866
- US-A- 5 059 015
- PATENT ABSTRACTS OF JAPAN vol. 097, no. 002, 28. Februar 1997 & JP 08 268188 A (MITSUBISHI MOTORS CORP), 15. Oktober 1996
- PATENT ABSTRACTS OF JAPAN vol. 013, no. 001 (P-808), 6. Januar 1989 & JP 63 210692 A (HONDA MOTOR CO LTD;OTHERS: 01), 1. September 1988
- PATENT ABSTRACTS OF JAPAN vol. 013, no. 001 (P-808), 6. Januar 1989 & JP 63 210691 A (HONDA MOTOR CO LTD;OTHERS: 01), 1. September 1988

## Beschreibung

Die Erfindung betrifft einen Außenrückblickspiegel für Fahrzeuge, vorzugsweise für Kraftfahrzeuge, nach dem Oberbegriff des Anspruches 1.

Bei einem bekannten, jedoch nicht vorveröffentlichten, Außenrückblickspiegel dieser Art (DE 195 38 771 A1) ist im Spiegelgehäuse eine Wiederholblinkleuchte vorgesehen. Als Lichtquelle wird eine hinter einer lichtdurchlässigen Scheibe angeordnete Glühlampe verwendet, deren Licht durch das Lichtaustrittsfenster nach außen tritt. Die Glühlampe erzeugt eine erhebliche Wärme innerhalb des Spiegelgehäuses und hat eine verhältnismäßig kurze Lebensdauer. Zudem hat die Glühlampe einen großen Platzbedarf und läßt sich nur aufwendig innerhalb des Spiegelgehäuses montieren.

Es ist auch ein Außenrückblickspiegel bekannt (Patent Abstracts of Japan 08-268168A), in dem eine Einrichtung untergebracht ist, mit der der tote Winkel des Außenrückblickspiegels ausgeschaltet werden soll. Im Spiegelgehäuse dieses Spiegels ist ein Ultraschallsensor vorgesehen, der über eine optische Faser an einen Stromkreis angeschlossen ist. Sobald der Ultraschallsensor ein Fahrzeug im toten Winkel des Außenrückblickspiegels erfaßt, sendet er über die optische Faser einen Licht-Impuls wodurch der Fahrer ein entsprechendes Signal erhält.

Der Erfindung liegt die Aufgabe zugrunde, den gattungsgemäßen Außenrückblickspiegel so auszubilden, daß eine einfache und kostengünstige Montage der Lichtquelle im Spiegelgehäuse gewährleistet ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel wird die Lichtaustrittsöffnung zumindest teilweise, vorteilhaft vollständig, vom Lichtleiter ausgefüllt. Über den Lichtleiter kann das von der Lichtquelle ausgesandte Licht einfach zur Lichtaustrittsöffnung geleitet werden. Die Verwendung eines Lichtleiters hat den Vorteil, daß als Lichtquelle vorteilhaft wenigstens eine LED herangezogen werden kann. An sie ist der Lichtleiter angeschlossen. Mit dem Lichtleiter ist eine sehr einfache Montage des Spiegelgehäuses und damit des Außenrückblickspiegels möglich. Der Lichtleiter mit der Lichtquelle wird vorteilhaft als Wiederholblinkleuchte verwendet.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: einen Querschnitt durch ein Spiegelgehäuse eines erfindungsgemäßen Außenrückblickspiegels,
- Fig. 2: einen Schnitt längs der Linie II-II in Fig. 1,
- Fig. 3: einen Schnitt durch eine Befestigungsstelle eines Lichtleiters des erfindungsgemäßen Außenrückblickspiegels,
- Fig. 4: eine Rückansicht des Spiegefgehäuses des erfindungsgemäßen Außenrückblickspiegels.

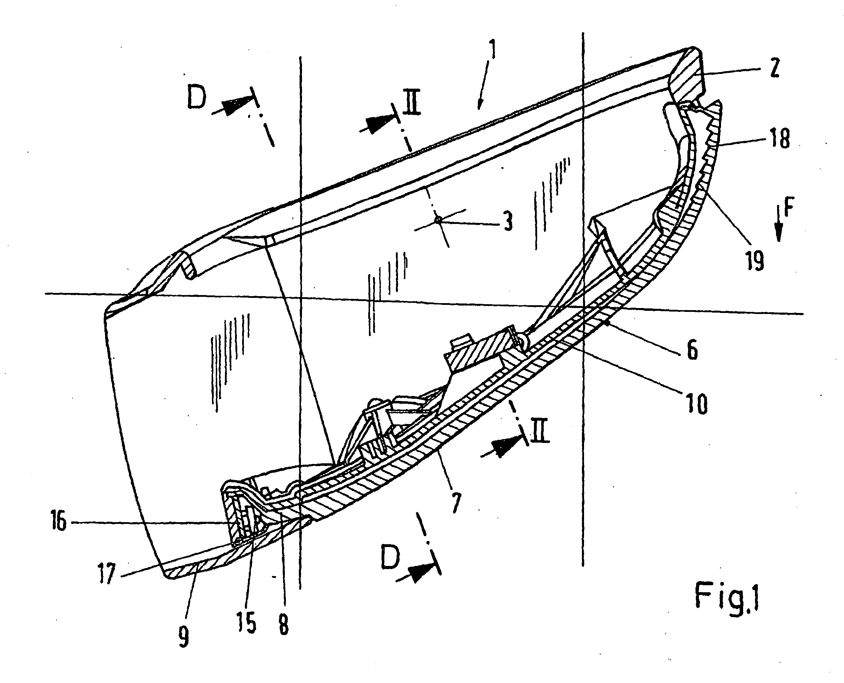

Der Außenrückblickspiegel hat einen (nicht dargestellten) Spiegelfuß, mit dem er an einem Fahrzeug, vorzugsweise einem Kraftfahrzeug, befestigt wird. Am Spiegelfuß ist ein Spiegelkopf 1 gelagert, der vorteilhaft in und entgegen Fahrtrichtung des Fahrzeuges gegenüber dem Spiegelfuß abklappbar ist. Der Spiegelkopf 1 hat ein Spiegelgehäuse 2, in dem in bekannter Weise eine (nicht dargestellte) Glasträgerplatte verstellbar gelagert ist, die ein Spiegelglas trägt. Die Glasträgerplatte ist mittels eines in Fig. 1 nur angedeuteten Kugelgelenkes 3 im Spiegelgehäuse 2 schwenkbar gelagert und kann manuell oder elektromotorisch eingestellt werden.

Das Spiegelgehäuse 2 weist an seiner in Fahrtrichtung F des Fahrzeuges nach vorn weisenden Wandung 4 mindestens eine Öffnung 5 auf, in der wenigstens ein Lichtfenster untergebracht ist, das aus Lichtleitermaterial besteht und somit einen Lichtleiter 6 bildet. Im Ausführungsbeispiel erstreckt sich der Lichtleiter 6 quer zur Fahrtrichtung horizontal. Er ist bandförmig ausgebildet und erstreckt sich über mehr als die halbe Breite des Spiegelgehäuses 2.

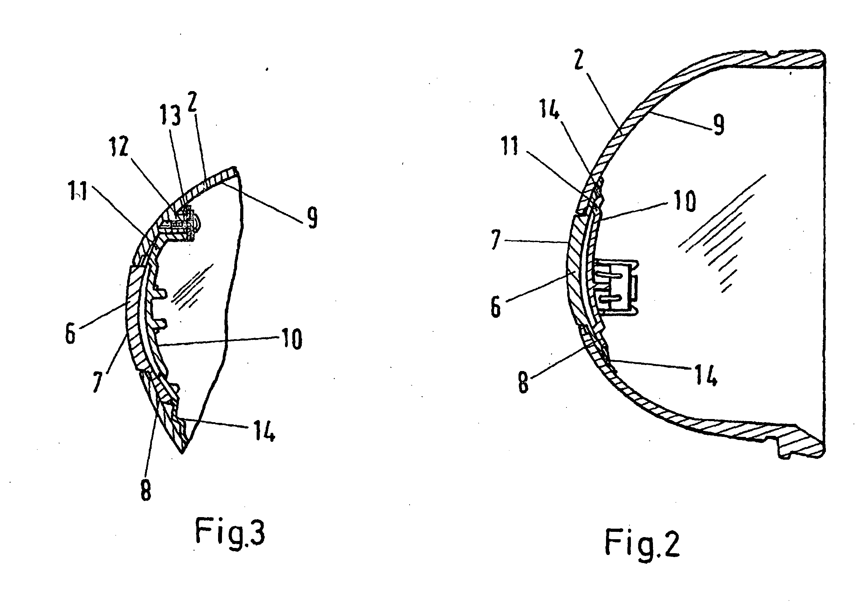

Der Lichtleiter 6 ist so geformt, daß seine Außenseite 7 (Fig. 2 und 3) zumindest annähernd eine stetige Fortsetzung der Wandung 4 des Spiegelgehäuses 2 im Bereich der Öffnung 5 bildet. Der Lichtleiter 6 hat einen umlaufenden, in der Dicke verringerten Anlageteil 8, der durch einen Rand gebildet ist, mit dem er an der Innenseite 9 des Spiegelgehäuses 2 anliegt (Fig. 2 und 3). Selbstverständlich muß der Anlageteil 8 nicht über den gesamten Umfang des Lichtleiters 6 verlaufen. So kann dieser Anlegeteil 8 auch nur abschnittsweise vorgesehen sein. Vorteilhaft jedoch verläuft der Anlageteil 8 über den gesamten Umfang des Lichtleiters 6 und schließt dadurch den Spalt zwischen dem Rand der Öffnung 5 und dem Lichtleiter 6, so daß Schmutz und dergleichen nicht nach innen in das Spiegelgehäuse 2 gelangen kann. Der Anlageteil 8 verläuft über seine Breite entsprechend der Wölbung der Wandung 4 des Spiegelgehäuses 2 gekrümmt, so daß er über seine Breite flächig an der Innenseite 9 des Spiegelgehäuses 2 anliegt. Der Lichtleiter 6 wird von der Innenseite des Spiegelgehäuses 2 in die Öffnung 5 so weit eingesetzt, bis der Anlageteil 8 an der Innenseite 9 des Spiegelgehäuses 2 anliegt. Der Anlageteil 8 des Lichtleiters 6 kann mit einem Klebstoff und dergleichen an der Innenseite 9 des Spiegelgehäuses 2 angeklebt werden. Um jedoch eine einfache Austauschbarkeit des Lichtleiters 6 zu gewährleisten, wird er vorteilhaft lösbar am Spiegelgehäuse 2 gehalten. Hierzu ist mindestens ein Halterungsteil 10 vorgesehen, das an der Rückseite des Lichtleiters 6 anliegt und lösbar am Spiegelgehäuse 2 befestigt ist. Das Halterungsteil 10 ist vorteilhaft so ausgebildet, daß es lediglich am Anlageteil 8 des Lichtleiters 6 anliegt, im übrigen jedoch Abstand vom Lichtleiter hat. Das Halterungsteil 10 ist hierzu mit einem Rand 11 versehen, der auf dem Anlageteil 8 des Lichtleiters 6 aufliegt. Vorteilhaft erstreckt sich der Rand 11 über den Umfang des Halterungsteiles 10. Es wird mit mindestens einer Schraube 12 (Fig. 3) am Spiegelgehäuse 2 befestigt. Es ist hierzu mit einem von seiner Innenseite 9 abstehenden Ansatz 13 versehen, in den die Schraube 12 geschraubt wird. Zusätzlich ist das Halterungsteil 10 mit einem Dichtteil 14 versehen, der an der Innenseite 9 des Spiegelgehäuses 2 anliegt (Fig. 2 und 3). Der Dichtteil 14 steht über den Rand 11 des Halterungsteiles 10 vor und verhindert, daß Licht aus dem Lichtleiter 6 in den Innenraum des Spiegelgehäuses 2 austritt und nach hinten abgestrahlt wird.

Der Lichtleiter 6 ist mit mindestens einer Lichtquelle 15 (Fig. 1) verbunden, die vorteilhaft eine LED ist. Sie sitzt auf einer Leiterplatte 16, die in einer Aufnahme 17 an der Innenseite 9 des Spiegeigehäuses 2 angeordnet ist. Die Lichtquelle 15 ist an einer Schmalseite des im wesentlichen rechteckigen Lichtleiters 6 vorgesehen. Der Lichtleiter 6 besteht vorteilhaft aus glasklarem Kunststoff und leitet das von der Lichtquelle 15 ausgesandte Licht zu einem Endbereich 18, der an der Innenseite mit einer Profilierung 19 versehen ist. An ihr wird das Licht gebildet bzw. konzentriert und nach außen gelenkt. Wie Fig. 1 zeigt, ist der Endbereich 18 das vom Fahrzeug abgewandte Ende des Lichtleiters 6. Der Endbereich 18 steht aus der Kontur des Spiegelgehäuses 2 nach außen vor. Die quer zur Fahrtrichtung F gemessene Länge des Endbereiches 18 kann je nach den gewünschten Anforderungen unterschiedlich sein. Die Profilierung 19 kann sich über die ganze Länge des Lichtleiters 6 erstrecken, so daß das Licht über die gesamte Länge des Lichtleiters 6 nach außen abgestrahlt wird.

Das abgestrahlte Licht ist deutlich sichtbar. Da sich der Lichtleiter 6 auf der in Fahrtrichtung F vorderen Seite des Spiegelgehäuses 2 befindet, ist das Licht von vorn deutlich erkennbar und erregt dadurch eine hohe Aufmerksamkeit. Der Endbereich 18 des Lichtleiters 6 ist im dargestellten Ausführungsbeispiel nahe an dem vom Fahrzeug abgewandten Außenrand des Spiegelgehäuses 2 vorgesehen, so daß das ausgesandte Licht auch von der Seite erkennbar ist.

Die Verwendung von LEDs als Lichtquelle 15 hat den Vorteil, daß nur eine geringe Wärmeentwicklung im Spiegelgehäuse 2 auftritt und daß die LED eine sehr hohe Lebensdauer hat. Darüber hinaus ist sie unempfindlich, benötigt nur wenig Platz und kann einfach befestigt werden. Die LED läßt sich auf der Leiterplatte 16 mittels Löten ohne Schwierigkeiten montieren.

Die elektrische Zuleitung zur Leiterplatte 16 erfolgt durch den (nicht dargestellten) Spiegelfuß des Außenrückblickspiegels. Darum ist eine zusätzliche Bohrung in der Fahrzeugkarosserie für diese elektrische Zuleitung nicht erforderlich. Da eine LED keine Fassung wie eine Glühlampe benötigt, treten auch keine Kontakt- und/oder Korrosionsprobleme auf.

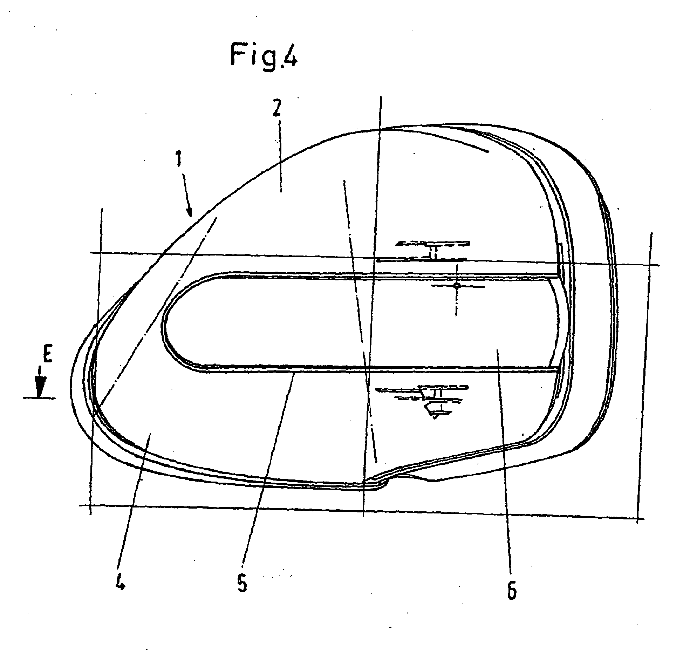

Der Lichtleiter 6 kann, abweichend vom Ausführungsbeispiel gemäß Fig. 4, jede andere geeignete Form haben. So ist es durchaus möglich, mehrere Lichtleiter an der Rückseite des Spiegelgehäuses 2 vorzusehen. Der Lichtleiter 6 muß auch nicht rechteckigen Querschnitt haben, sondern kann jeden geeigneten Umriß aufweisen. Die Lichtquelle 15 kann eingefärbt sein, so daß über den Lichtleiter 6 Licht mit unterschiedlichem Farbton ausgesandt werden kann.

## Patentansprüche

1. Außenrückblickspiegel für Fahrzeuge, vorzugsweise für Kraftfahrzeuge, mit einem Spiegelgehäuse (2), in dem eine Glasträgerplatte verstellbar untergebracht ist und das eine Wiederholblinkleuchte mit mindestens einer Lichtquelle (15) aufweist, der wenigstens eine Lichtaustrittsöffnung (5) im Spiegelgehäuse (2) zugeordnet ist,
**dadurch gekennzeichnet, daß** die Lichtaustrittsöffnung (5) zumindest teilweise mit einem Lichtleiter (6) ausgefüllt ist, der einen Teil der Außenkontur des Spiegelgehäuses (2) bildet und innerhalb des Spiegelgehäuses (2) mit der Lichtquelle (15) derart verbunden ist, daß die Lichtquelle (15) ihr Licht in den Lichtleiter (6) einstrahlt, der das Licht zu einer Auslenkprofilierung (19) des Lichtleiters (6) leitet.

2. Außenrückblickspiegel nach Anspruch 1,
**dadurch gekennzeichnet, daß** der Lichtleiter (6) die Lichtaustrittsöffnung (5) vollständig ausfüllt.

3. Außenrückblickspiegel nach Anspruch 1 oder 2,
**dadurch gekennzeichnet, daß** der Lichtleiter (6) aus glasklarem Kunststoff besteht.

4. Außenrückblickspiegel nach einem der Ansprüche 1 bis 3,'
**dadurch gekennzeichnet, daß** die Lichtquelle (15) eine LED ist.

5. Außenrückblickspiegel nach einem der Ansprüche 1 bis 4,
**dadurch gekennzeichnet, daß** der Lichtleiter (6) mit seiner Außenseite (7) zumindest annähernd eine stetige Fortsetzung der Wandung des Spiegelgehäuses (2) im Bereich der Lichtaustrittsöffnung (5) bildet.

6. Außenrückblickspiegel nach-einem der Ansprüche 1 bis 5,
**dadurch gekennzeichnet, daß** der Lichtleiter (6) an der Innenseite (9) des Spiegelgehäuses (2) anliegt.

7. Außenrückblickspiegel nach Anspruch 6,
**dadurch gekennzeichnet, daß** der Lichtleiter (6) mindestens einen Anlageteil (8) aufweist, mit dem er an der Innenseite (9) des Spiegelgehäuses (2) anliegt.

8. Außenrückblickspiegel nach Anspruch 7,
**dadurch gekennzeichnet, daß** der Anlageteil (8) durch einen wenigstens teilweise umlaufenden Rand des Lichtleiters (6) gebildet ist.

9. Außenrückblickspiegel nach Anspruch 7 oder 8,
**dadurch gekennzeichnet, daß** der Anlageteil (8) in der Dicke verringert ist.

10. Außenrückblickspiegel nach einem der Ansprüche 1 bis 9,
**dadurch gekennzeichnet, daß** der Lichtleiter (6) lösbar am Spiegelgehäuse (2) gehalten ist.

11. Außenrückblickspiegel nach einem der Ansprüche 1 bis 10,
**dadurch gekennzeichnet, daß** der Lichtleiter (6) mit mindestens einem Halterungsteil (10) gesichert ist.

12. Außenrückblickspiegel nach Anspruch 11,
**dadurch gekennzeichnet, daß** das Halterungsteil (10) lösbaran der Innenseite (9) des Spiegelgehäuses (2) gehalten ist.

13. Außenrückblickspiegel nach Anspruch 11 oder 12,
**dadurch gekennzeichnet, daß** das Halterungsteil (10) mit wenigstens einem Dichtteil (14) versehen ist, der an der Innenseite (9) des Spiegelgehäuses (2) anliegt.

14. Außenrückblickspiegel nach einem der Ansprüche 11 bis 13,
**dadurch gekennzeichnet, daß** das Halterungsteil (10) im Bereich der Lichtaustrittsöffnung (5) dem Lichtleiter (6) mit Abstand gegenüberliegt.

## Claims

1. An exterior rearview mirror for vehicles, preferably for motor vehicles, with a mirror housing (2), in which a glass carrier plate is adjustably disposed and which comprises a repeat signal light with at least one light source (15), with which at least one light exit opening (5) in the mirror housing (2) is associated, wherein the light exit opening (5) is at least partially filled with a light conductor (6), which forms a portion of the outer contour of the mirror housing (2) and which is connected within the mirror housing (2) to the light source (15), so that the light source (15) radiates its light into the light conductor (6), which conducts the light to a deflection profile (19) of the light conductor.

2. A rear-view mirror according to Claim 1,
**characterised in that** the light guide (6) completely fills the light exit opening (5).

3. A rear-view mirror according to Claim 1 or 2,
**characterised in that** the light guide (6) is made of transparent plastics material.

4. A rear-view mirror according to one of Claims 1 to 3,
**characterised in that** the light source (15) is an LED.

5. A rear-view mirror according to one of Claims 1 to 4,
**characterised in that** the light guide (6) forms, with its outside, at least approximately one continuous extension of the wall of the mirror housing (2) in the region of the light exit opening (5).

6. A rear-view mirror according to one of Claims 1 to 5,
**characterised in that** the light guide (6) fits against the inside of the mirror housing (2).

7. A rear-view mirror according to Claim 6,
**characterised in that** the light guide (6) has at least one fitting part (8) with which it fits against the inside (9) of the mirror housing (2).

8. A rear-view mirror according to Claim 7,
**characterised in that** the fitting part (8) is formed by an at least partially encircling margin of the light guide (6).

9. A rear-view mirror according to Claim 7 or 8,
**characterised in that** the fitting part (8) is of a reduced thickness.

10. A rear-view mirror according to one of Claims 1 to 9,
**characterised in that** the light guide (6) is releasably mounted on the mirror housing (2).

11. A rear-view mirror according to one of Claims 1 to 10,
**characterised in that** the light guide (6) is secured with at least one mounting part (10).

12. A rear-view mirror according to Claim 11,
**characterised in that** the mounting part (10) is releasably mounted on the inside (9) of the mirror housing (2).

13. A rear-view mirror according to Claim 11 or 12,
**characterised in that** the mounting part (10) is provided with at least one sealing part (14), which fits against the inside (9) of the mirror housing (2).

14. A rear-view mirror according to one of Claims 11 to 13,
**characterised in that**, in the region of the light exit opening (5), the mounting part (10) is positioned opposite and at a distance from the light guide (6).

## Revendications

1. Rétroviseur extérieur pour véhicules, de préférence pour véhicules à moteur, avec un boîtier de rétroviseur (2), dans lequel est logée avec possibilité de réglage une plaque porteuse de verre et qui présente un feu clignotant doté d'au moins une source lumineuse (15), à laquelle est associée au moins une ouverture de sortie de lumière (5) dans le boîtier de rétroviseur(2),
**caractérisé en ce que** l'ouverture de sortie de lumière (5) est remplie au moins partiellement d'un conducteur de lumière (6), qui constitue une partie du contour extérieur du boîtier de rétroviseur (2) et est relié à la source lumineuse (15) à l'intérieur du boîtier de rétroviseur (2) de telle sorte que la source lumineuse (15) irradie sa lumière dans le conducteur de lumière (6), qui dirige la lumière vers un profilage de déviation (19) du conducteur de lumière (6).

2. Rétroviseur extérieur selon la revendication 1, **caractérisé en ce que** le conducteur de lumière (6) remplit totalement l'ouverture de sortie de lumière (5).

3. Rétroviseur extérieur selon la revendication 1 ou 2, **caractérisé en ce que** le conducteur de lumière (6) est réalisé en matière plastique claire.

4. Rétroviseur extérieur selon l'une des revendications 1 à 3,
**caractérisé en ce que** la source lumineuse (15) est une diode électroluminescente (DEL).

5. Rétroviseur extérieur selon l'une des revendications 1 à 4,
**caractérisé en ce que** le conducteur de lumière (6) constitue au moins approximativement, par sa face extérieure (7) un prolongement continu de la paroi du boîtier de rétroviseur (2) dans la région de l'ouverture de sortie de lumière (5).

6. Rétroviseur extérieur selon l'une des revendications 1 à 5,
**caractérisé en ce que** le conducteur de lumière (6) s'applique contre la face intérieure (9) du boîtier de rétroviseur (2).

7. Rétroviseur extérieur selon la revendication 6, **caractérisé en ce que** le conducteur de lumière (6) présente au moins un élément d'application (8), par laquelle il s'applique contre la face intérieure (9) du boîtier de rétroviseur (2).

8. Rétroviseur extérieur selon la revendication 7, **caractérisé en ce que** l'élément d'application (8) est formé par un bord au moins partiellement entourant du conducteur de lumière (6).

9. Rétroviseur extérieur selon la revendication 7 ou 8, **caractérisé en ce que** l'élément d'application (8) est d'épaisseur réduite.

10. Rétroviseur extérieur selon l'une des revendications 1 à 9,
**caractérisé en ce que** le conducteur de lumière (6) est maintenu de manière amovible sur le boîtier de rétroviseur (2).

11. Rétroviseur extérieur selon l'une des revendications 1 à 10,
**caractérisé en ce que** le conducteur de lumière (6) est assujetti par au moins un élément de maintien (10).

12. Rétroviseur extérieur selon la revendication 11, **caractérisé en ce que** l'élément de maintien (10) est fixé de manière amovible sur la face intérieure (9) du boîtier de rétroviseur (2).

13. Rétroviseur extérieur selon la revendication 11 ou 12, **caractérisé en ce que** l'élément de maintien (10) est pourvu d'au moins un élément d'étanchéité (14), qui s'applique contre la face intérieure (9) du boîtier de rétroviseur (2).

14. Rétroviseur extérieur selon l'une des revendications 11 à 13,
**caractérisé en ce que** l'élément de maintien (10) fait face au conducteur de lumière (6) à distance dans la région de l'ouverture de sortie de lumière (5).
